# EUROPEAN PATENT APPLICATION

(11) **EP 2 572 961 A1**
(43) Date of publication of application: **27.03.2013**
(21) Application number: 12185841.9
(22) Date of filing: 25.09.2012
(51) Int. Cl.: B62D 1/181, B62D 1/185

(54) **Steering apparatus for vehicle**

(30) Priority: 26.09.2011 JP 2011208391; 26.09.2011 JP 2011208394
(71) Applicant: AISIN SEIKI KABUSHIKI KAISHA, Kariya-shi, Aichi-ken 448-8650 (JP)
(72) Inventor: Toyoda, Makoto, Kariya-shi, Aichi-ken, 448-8650 (JP); Morinaga, Shinya, Kariya-shi, Aichi-ken, 448-8650 (JP); Inayoshi, Hidetoshi, Kariya-shi, Aichi-ken, 448-8650 (JP)
(74) Representative: Winter, Brandl, Fürniss, Hübner, Röss, Kaiser, Polte - Partnerschaft

(57) **Abstract**

A steering apparatus for a vehicle includes a main housing (10) including first and second side walls (11, 12) extending in an axial direction with an opening formed between the first and second side walls, the main housing including opening portions at opposing ends in the axial direction, a movable column member (20) formed by a tubular member and supported to the main housing, the movable column member accommodated into the main housing through one of the opening portions (10a, 10b) and connected to a steering wheel (100), a bearing member (60) mounted at an inner wall of the main housing through the opening formed between the first and second side walls, and a biasing member (40) fixed to respective end surfaces of the first and second side walls. The movable column member (20) is supported to the main housing (10) in a state where the biasing member (40) biases the movable column member to the main housing via the bearing member (60).

## Description

### TECHNICAL FIELD

This disclosure generally relates to a steering apparatus for a vehicle.

### BACKGROUND DISCUSSION

According to a known steering apparatus for a vehicle, various measures have been taken so as to inhibit looseness or shakiness between column members connected to each other. Specifically, according to a known steering apparatus for a vehicle configured to adjust an operation position of a steering wheel in a frontward and rearward direction, i.e., in a longitudinal direction, of a vehicle, it is important to inhibit looseness or shakiness between a main housing supported to a vehicle body and a movable column member movably connected to the main housing to thereby ensure a smooth sliding performance. For example, JP2000-280917A (which will be hereinafter referred to as Reference 1) discloses a steering position adjustment control apparatus including a fixed column, a moving column, a rotating column, a lower shaft, a center shaft, an upper shaft, a tilt mechanism, a telescopic mechanism, and a control unit. The fixed column substantially having a tubular form is fixed to a vehicle body so as to extend in a longitudinal direction of a vehicle. The moving column is fitted within the fixed column so as to axially and retractably move relative to the fixed column. The rotating column is pivotally supported to the moving column. The lower shaft is axially supported within the fixed column. The center shaft is arranged within the moving column while being retractably fitted to the lower shaft and integrally rotating with the lower shaft. The upper shaft is axially supported to the rotating column in a state where a steering wheel is fitted to the upper shaft so as to transmit a rotational operation of the steering wheel to the center shaft. The tilt mechanism causes the rotating column to rotate. The telescopic mechanism causes the moving column to be elongated or contracted relative to the fixed column. The control unit controls motors of the tilt mechanism and the telescopic mechanism. A cross-section of an end portion of the fixed column at a rear of the vehicle perpendicular to an axial direction of the fixed column is formed into a ring shape, i.e., having a continuous circumference. A bush having a cylindrical shape is disposed between fitting surfaces of the fixed column and the moving column therebetween. In order to ensure a sliding performance between the fixed column and the moving column, the bush having the cylindrical shape is disposed between the fixed column and the moving column accordingly.

JP2001-310741A (which will be hereinafter referred to as Reference 2) discloses a telescopic steering apparatus that achieves a smooth telescopic movement with simple configuration while not generating a rotational movement of a movable bracket relative to a fixed bracket during a telescopic movement. The telescopic steering apparatus disclosed in Reference 2 includes the fixed bracket fixed to a vehicle body, a fixed shaft rotatably supported to the fixed bracket, the movable bracket fitted to the fixed bracket such that the movable bracket is slidable in an axial direction thereof, a movable shaft connected to the fixed shaft such that the movable shaft is movable relative to the fixed shaft and rotates integrally with the fixed shaft, the movable shaft rotatably supported to the movable bracket, and a movement mechanism that moves the movable bracket and the movable shaft in the axial direction relative to the fixed bracket and the fixed shaft. In the telescopic steering apparatus disclosed in Reference 2, an external peripheral portion of the movable bracket fitted to the fixed bracket is provided with at least one flat surface portion, and a contact member provided with a flat surface end portion that comes in contact with the flat surface portion is retained to the fixed bracket.

The fixed column and the moving column described in Reference 1 correspond to the aforementioned main housing and the movable column member while the fixed bracket, which includes a steering column and a lower tube, and the movable bracket, which includes a telescopic tube and an upper tube, in Reference 2 correspond to the aforementioned main housing and the movable column member. Each of the members corresponding to the aforementioned main housing and the movable column member in each of Reference 1 and Reference 2 is a tubular member forming an outer tube or an inner tube. In order to inhibit looseness or shakiness between the outer tube and the inner tube to ensure a sliding performance therebetween, a bush having a cylindrical shape (a cylindrical bush) is provided as a bearing member.

Each of the fixed column in Reference 1 and the steering column and the lower tube constituting the fixed bracket in Reference 2 serves as the aforementioned main housing. That is, the main housing is the tubular member (the outer tube) so that the bush is disposed between the main housing (the outer tube) and the movable column member (the inner tube). As a result, a highly-accurately processing may be required at inner and outer surfaces of both the tubular members (the outer tube and the inner tube). In addition, according to Reference 1, for example, a cross-section of an end portion of the cylindrical bush at a rear of the vehicle perpendicular to an axial direction of the bush is required to be circumferentially continuously formed, i.e., formed into a ring shape. According to each of Reference 1 and Reference 2, the bush having the cylindrical shape is configured to be press-fitted between the both tubular members (the outer tube and the inner tube). Therefore, a strict dimensional control is necessary when the tubular members are manufactured and an assembly of the tubular members is difficult.

Further, for a steering apparatus configured to adjust an operation position of a steering wheel in a longitudinal direction of a vehicle, a means for restricting an axial movement of a movable column member supported to be axially movable relative to a main housing supported to a vehicle body is required so that the movable column member is inhibited from disengaging from the main housing. Such means, i.e., a movement restriction means is disclosed in JP11-70880A (which will be hereinafter referred to as Reference 3). According to a steering position adjustment control apparatus disclosed in Reference 3, a fixed column is fixed to a vehicle body by means of an attachment bracket and a movable column is slidable relative to the fixed column in a longitudinal direction of a vehicle. The movable column is axially guided by a pin provided at the fixed column so that a rotation of the movable column relative to the fixed column is restricted.

According to a steering column disclosed in JP2010-188901A (which will be hereinafter referred to as Reference 4), an outer tube is supported to a column housing by means of bearings. The outer tube is press-fitted to an inner wall of the column housing by a friction mechanism including a disc spring. Thus, a sliding performance in a thrust direction of a steering wheel is ensured without looseness or shakiness. The bearings are disposed between the column housing and the outer tube. Further, according to the steering column disclosed in Reference 4, the outer tube is assembled on an inner tube in a state where an engagement pin fixed to the outer tube engages with an engagement bore formed at the inner tube. The engagement pin projects at an inner side of the outer tube so as to make contact and engage with an inner wall surface of the engagement bore at a front end of the vehicle. The projection height of the engagement pin is specified so that the engagement pin is inhibited from making contact with an outer surface of a flat surface portion formed at the inner tube. Accordingly, the inner tube is securely inhibited from disengaging from the outer tube at a rear side of the vehicle.

However, as for the axial movement of the movable column member relative to the main housing as mentioned above, the bearings disclosed in Reference 4 may not restrict the axial movement of the outer tube relative to the column housing. In addition, the engagement pin in Reference 4 inhibits the inner tube from disengaging from the outer tube but does not restrict the axial movement of the outer tube relative to the column housing. On the other hand, the pin disclosed in Reference 3 contributes to not only the restriction of the rotation of the movable column but also the restriction of the axial movement of the movable column. At this time, the fixed column and the movable column in Reference 3 correspond to the aforementioned main housing and the movable column member respectively. In addition, the column housing and the outer tube in Reference 4 correspond to the aforementioned main housing and the movable column member respectively.

In order to achieve a means for restricting the axial movement of the movable column member relative to the main housing, not only the pin but also a hole into which the pin is inserted is required to be processed according to Reference 3, which leads to an increase of the number of components and assembly hours. According to Reference 4, the axial movement of the outer tube may not be restricted by the bearings only.

A need thus exists for a steering apparatus for a vehicle configured to adjust an operation position of a steering wheel at least in a frontward and rearward direction of a vehicle, the steering apparatus that may inhibit looseness or shakiness between a main housing supported to a vehicle body and a movable column member supported to the main housing so as to be axially movable by a reduced number of components and a reduced cost and that may achieve a simple assembly of a bearing member. In addition, a need thus exists for the steering apparatus that achieves a means for restricting an axial movement of the movable column member relative to the main housing by a reduced number of components and a reduced cost.

### SUMMARY

According to an aspect of this disclosure, a steering apparatus for a vehicle configured to adjust an operation position of a steering wheel at least in a frontward and rearward direction of a vehicle, the steering apparatus includes a main housing retained to a vehicle body and including first and second side walls extending in an axial direction of the main housing with an opening formed between the first and second side walls, the main housing including opening portions at opposing ends in the axial direction, a movable column member formed by a tubular member and supported to the main housing to be movable in the axial direction relative to the main housing, the movable column member accommodated into the main housing through one of the opening portions at the opposing ends of the main housing in the axial direction, the movable column member being connected to the steering wheel, a bearing member mounted at an inner wall of the main housing through the opening formed between the first and second side walls, the bearing member supporting the movable column member to be slidable relative to the main housing, and a biasing member fixed to respective end surfaces of the first and second side walls of the main housing to bias the movable column member. The movable column member is supported to the main housing in a state where the biasing member biases the movable column member to the main housing via the bearing member.

Accordingly, the bearing member is easily assembled on the main housing. Looseness or shakiness between the main housing and the movable column member is securely inhibited by a reduced number of components and a reduced cost while an assembly performance is ensured.

The first and second side walls of the main housing form a distance therebetween, a length of the distance being greater than a diameter of the tubular member forming the movable column member, and the inner wall of the main housing includes a curved surface fitting an exterior surface of the movable column member.

Accordingly, because the main housing may be manufactured with metal die-cast, the steering apparatus with the reduced number of components, easy processing and assembly, and the reduced cost is achieved.

The main housing includes a cross-sectional shape obtained in a direction perpendicular to the axial direction, the cross-sectional shape being formed in a U-shape while including the first and second side walls, and the bearing member is formed in a U-shape fitting the inner wall of the main housing.

Accordingly, the bearing member is easily assembled on the main housing through the opening formed at the main housing.

The main housing includes an engagement bore at the inner wall, and the bearing member includes an engagement projection engaging with the engagement bore.

Accordingly, the bearing member is stably retained within the main housing. In addition, after the movable column member is accommodated within the main housing, the engagement projection within the engagement bore is visually observed from the outside of the main housing so that it is confirmed that the bearing member is stably retained within the main housing.

The inner wall of the main housing is formed by a recess retaining the bearing member.

Accordingly, the bearing member is further easily assembled on the main housing so that the bearing member is securely retained within the main housing. Because the recess may be formed at the inner wall of the main housing at the same time the main housing is manufactured with die-cast, a later cutting process may not be necessary, which leads to a reduced manufacturing cost.

The bearing member includes a pair of bushes supporting the movable column member at positions separated from each other by a predetermined distance in the axial direction.

Accordingly, the movable column member may be supported at appropriate positions.

The pair of bushes is connected to be integrally formed.

Accordingly, the bearing member is further easily assembled on the main housing, and a storage of the bearing member before being assembled on the main housing may be easily conducted, which leads to an increased productivity.

Each of the pair of bushes is divided into a first portion making contact with the movable column member and a second portion inhibited from making contact with the movable column member, and a thickness of the second portion is smaller than a thickness of the first portion.

Accordingly, a material and a weight of the bearing member may be reduced.

Each of the pair of bushes includes a portion making contact with the movable column member and including an inner surface, the inner surface being formed by a groove where a slide grease is retained.

Accordingly, a smooth sliding performance of the movable column member is ensured.

The biasing member includes a base plate fixed to the respective end surfaces of the first and second side walls, and a pair of spring members supported to the base plate to bias the movable column member towards the bearing member.

Accordingly, looseness or shakiness between the main housing and the movable column member is securely inhibited with the reduced number of components.

The movable column member includes an enlarged diameter portion obtained by an enlargement of a diameter of at least a portion of the movable column member at a front side of the vehicle body, and the movable column member is configured to be inhibited from moving in the axial direction in a case where the enlarged diameter portion of the movable column member makes contact with the bearing member in a state where a rear end of the movable column member in a rearward direction of the vehicle body is accommodated into the main housing through one of the opening portions in a frontward direction of the vehicle body and the movable column member is biased by the biasing member.

Accordingly, a means for restricting the movement of the movable column member in the axial direction relative to the main housing is easily and securely obtained by the movable column member where the enlarged diameter portion is formed and the bearing member, and also the assembly performance is ensured.

The enlarged diameter portion of the movable column member includes an outer diameter greater than an inner diameter of the bearing member, and the movable column member is arranged so that the enlarged diameter portion is contactable with a side surface of the bearing member.

Accordingly, the axial movement of the movable column member may be securely restricted by a simple structure.

The main housing integrally includes a projection portion projecting from the inner wall of the main housing to an axial center thereof. the movable column member is formed by the tubular member accommodated into the main housing and supported to the projection portion to be slidable thereto, the movable column member including an enlarged diameter portion obtained by an enlargement of a diameter of at least a portion of the movable column member at a front side of the vehicle body. the movable column member is supported to be movable in the axial direction relative to the main housing in a state where a rear end of the movable column member in a rearward direction of the vehicle body is accommodated into the main housing through one of the opening portions in a frontward direction of the vehicle body and the movable column member is biased by the biasing member, the movable column member being configured to be inhibited from moving in the axial direction in a case where the enlarged diameter portion of the movable column member makes contact with the projection portion.

Accordingly, the means for restricting the movement of the movable column member in the axial direction relative to the main housing may be easily and securely achieved by the movable column member where the enlarged diameter portion is formed and the projection portion formed at the main housing 10. In addition, the assembly performance is ensured.

The first and second side walls of the main housing form a distance therebetween, a length of the distance being greater than an outer diameter of the enlarged diameter portion of the movable column member, and the inner wall of the main housing includes a curved surface fitting an exterior surface of the movable column member.

Accordingly, the processing and the assembly of the main housing and the movable column member may be easily performed.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a plan view illustrating an assembly state of a portion of a steering apparatus for a vehicle according to a first embodiment disclosed here;

Fig. 2 is a side view illustrating the assembly state of the portion of the steering apparatus according to the first embodiment;

Fig. 3 is a side view illustrating an entire structure of the steering apparatus according to the first embodiment;

Fig. 4 is a cross-sectional view of a portion of the steering apparatus according to the first embodiment;

Fig. 5 is a cross-sectional view taken along a line V-V in Fig. 4;

Fig. 6 is a cross-sectional view taken along a line VI-VI in Fig. 5;

Fig. 7 is a plan view illustrating a bearing member provided at the steering apparatus according to the first embodiment;

Fig. 8 is a front view and a side view illustrating the bearing member according to the first embodiment;

Fig. 9 is a perspective view illustrating the bearing member according to the first embodiment;

Fig. 10 is a perspective view illustrating a first modified example of the bearing member;

Fig. 11 is a plan view illustrating a second modified example of the bearing member;

Fig. 12 is a plan view illustrating a third modified example of the bearing member;

Fig. 13 is a side view illustrating the third modified example of the bearing member;

Fig. 14 is a plan view illustrating a fourth modified example of the bearing member;

Fig. 15 is a cross-sectional view illustrating an assembly state of a portion of a steering apparatus for a vehicle according to a second embodiment disclosed here;

Fig. 16 is a cross-sectional view taken along a line XVI-XVI in Fig. 15;

Fig. 17 is an enlarged cross-sectional view illustrating a portion of the steering apparatus according to the second embodiment;

Fig. 18 is a cross-sectional view illustrating a state after a movable column member is moved according to the second embodiment;

Fig. 19 is a partially enlarged cross-sectional view illustrating the state after the movable column member is moved according to the second embodiment;

Fig. 20 is a cross-sectional view taken along a line XX-XX in Fig. 15 illustrating a fifth modified example of the bearing member according to the second embodiment;

Fig. 21 is a cross-sectional view taken along a line XXI-XXI in Fig. 15 illustrating a sixth modified example of the bearing member according to the second embodiment; and

Fig. 22 is a cross-sectional view illustrating the state after the movable column member is moved according to a modified embodiment of the second embodiment.

### DETAILED DESCRIPTION

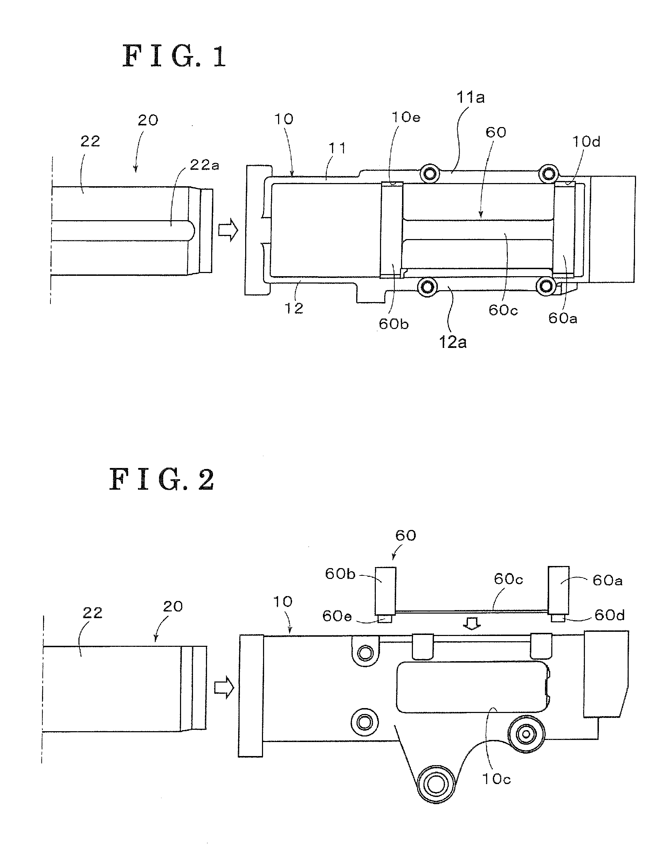

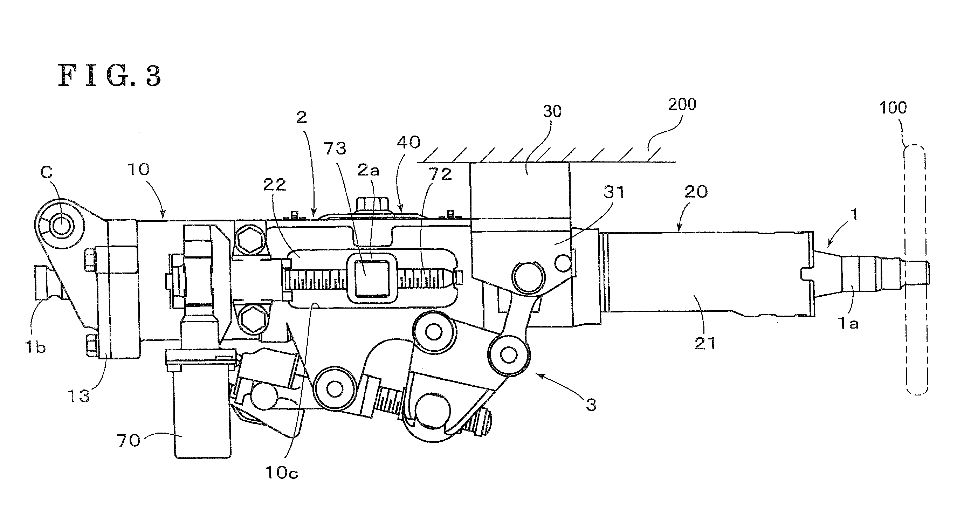

A steering apparatus for a vehicle according to embodiments will be described as follows referring to drawings. In the following embodiments, directions and orientations such as left, right, front, rear, top, and bottom correspond to those of a vehicle. Figs. 1 to 10 illustrate the steering apparatus according to a first embodiment. As illustrated in Fig. 3, the steering apparatus includes a steering shaft 1 including an upper shaft 1a formed in a tubular form and a lower shaft 1b that is spline-fitted to a front end portion of the upper shaft 1a. A steering wheel 100 connects to a rear end portion of the upper shaft 1a. In other words, the upper shaft 1a and the lower shaft 1b are connected such that the upper shaft 1a and the lower shaft 1b may move relative to each other in an axial direction thereof. A front end portion of the lower shaft 1b connects to a steering mechanism. The steering mechanism is driven to steer vehicle wheels via a wheel steering mechanism in response to an operation of the steering wheel 100.

A main housing 10 is coaxially arranged with the steering shaft 1. The main housing 10 is retained by a fixing bracket 30. At the same time, the main housing 10 is retained at a pivoting center C such that the main housing 10 is pivotable thereat relative to a vehicle body 200. The fixing bracket 30 includes a pair of retaining portions 31 opposing each other extending in a downward direction of the vehicle. In Fig. 3, one of the retaining portions 31 is illustrated. The main housing 10 is retained between the pair of retaining portions 31 so that the main housing 10 is fixed to the vehicle body 200 at an upper side in Fig. 3. A thrust mechanism is placed between each of the retaining portions 31 of the fixing bracket 30 and the main housing 10 so that the main housing 10 is slidably supported to the fixing bracket 30.

Within the main housing 10, a movable column member 20 is retained such that the movable column member 20 may move in the axial direction, which is the direction in a frontward and rearward direction of the vehicle. The movable column member 20 includes an inner tube 21 made of metal and an outer tube 22 made of metal. That is, the movable column member 20 is formed by a tubular member. The inner tube 21 accommodates the steering shaft 1 and retains the steering shaft 1 such that the steering shaft 1 may rotate at the axis. The outer tube 22 accommodates the inner tube 21. In an ordinary situation, the outer tube 22 retains the inner tube 21 at a predetermined position. The inner tube 21 is also referred to as an upper tube. The outer tube 22 is also referred to as a telescopic tube. The upper shaft 1a is rotatably supported to a rear end portion of the inner tube 21 via a bearing. A relative movement in the axial direction between the upper shaft 1a and the inner tube 21 is restricted. Accordingly, the upper shaft 1a and the inner tube 21 are configured to move integrally in the axial direction.

A telescopic mechanism 2 is configured such that the outer tube 22, the inner tube 21, the steering shaft 1, and the steering wheel 100 may move integrally in the axial direction relative to the main housing 10, so that the steering wheel 100 is adjusted to an intended position in the frontward and rearward direction of the vehicle. The telescopic mechanism 2 is configured to allow a relative movement of the inner tube 21, accordingly a relative movement of the upper shaft 1a, in the axial direction relative to the outer tube 22 in a case where the steering shaft 1 is applied with a load equal to or more than a predetermined value. In other words, the inner tube 21 and the outer tube 22 function as an energy absorbing means together with an annular frictional member, for example, a resilient bush made of metal, or similar placed between the inner tube 21 and the outer tube 22.

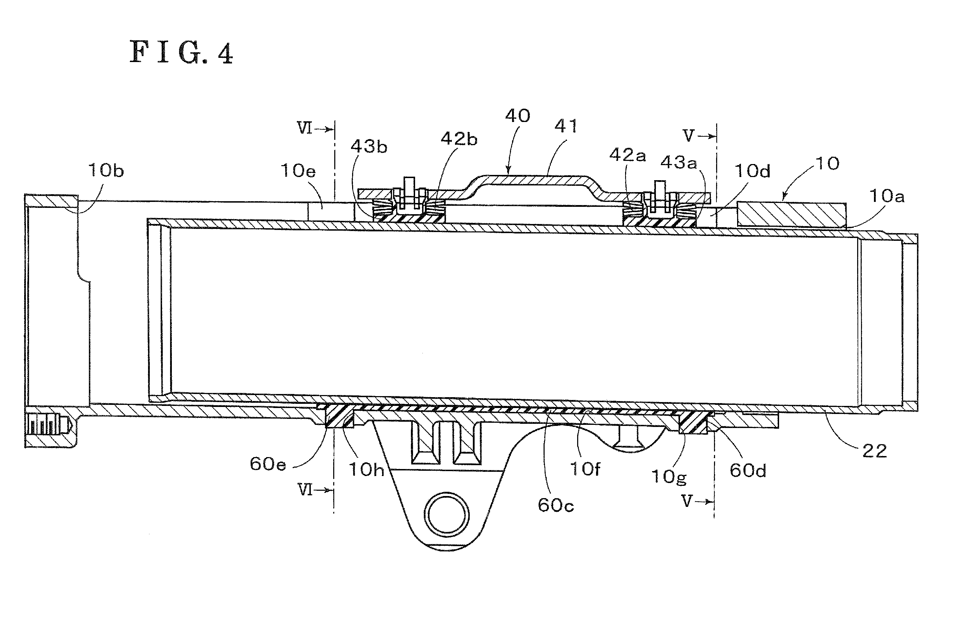

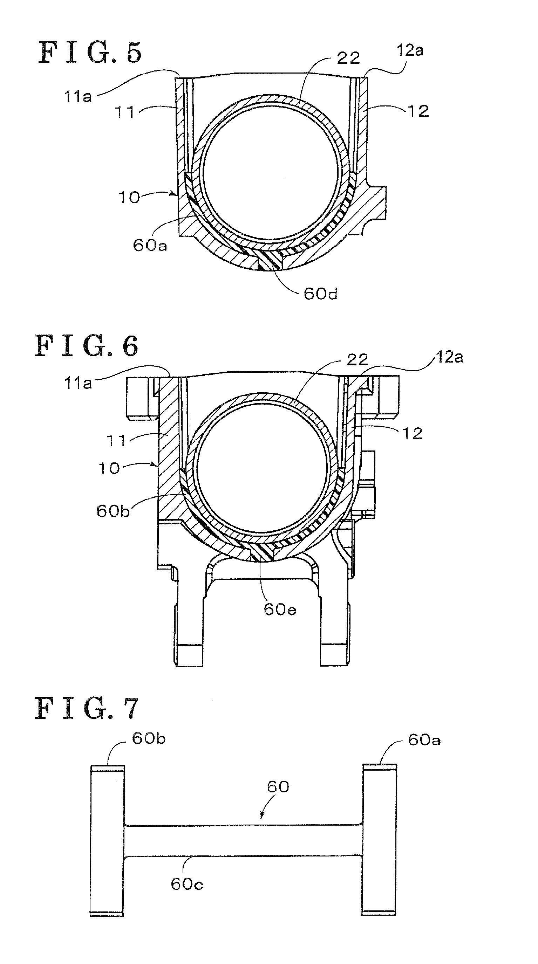

As Fig. 1 illustrates, the main housing 10 of the steering apparatus according to the first embodiment is a case made by metal die-cast. The metal used for the die-cast, for example, is aluminum. The main housing 10 is provided with a pair of side walls 11, 12 serving as first and second side walls and extending in the axial direction. The side walls 11, 12 are provided with an opening therebetween in an upward direction of the vehicle. At the same time, the main housing 10 is provided with opening portions 10a, 10b at opposing ends in the axial direction as illustrated in Fig. 4. The main housing 10 is provided with a larger size between the side walls 11, 12 relative to a diameter of the outer tube 22 that constitutes the movable column member 20. That is, the side walls 11, 12 of the main housing 10 form a distance therebetween, a length of the distance being greater than a diameter of the movable column member 20. An inner wall of the main housing 10 is provided with a curved surface fitting the exterior surface of the outer tube 22. As Figs. 5 and 6 illustrate, the main housing 10 is provided with a cross-sectional shape obtained in a direction perpendicular to the axial direction, the cross-sectional shape including the pair of side walls 11, 12, in a U-shape. The main housing 10 serves as the case provided with the side walls 11, 12 extending in the axial direction with the opening therebetween in the upward direction in Figs. 5 and 6. Accordingly, the main housing 10 may be manufactured without difficulty with aluminum die-cast, or a similar manufacturing method. As a result, the inner surface of the main housing 10 may be formed in an intended form, i.e., a curved surface fitting the exterior surface of the outer tube 22, without difficulty in a manufacturing process. In addition, recesses 10d, 10e, 10f, and engagement bores 10g, 10h (see Fig. 4) are simultaneously formed when the main housing 10 is manufactured. Therefore, a cutting process and a punching process are not required, which may lead to a reduction of the manufacturing process.

The outer tube 22, which is made of metal, is formed in a tubular form. The outer tube 22 is formed with a flat surface portion 22a, extending in the axial direction on the exterior surface of the outer tube 22. As illustrated in Fig. 4, a biasing member 40 including a base plate 41, spring members 42a, 42b, and contact members 43a, 43b is fixed to the main housing 10 while pressing the flat surface portion 22a of the outer tube 22. According to the first embodiment, as indicated by hollow arrows in Figs. 1 and 2, the outer tube 22 is accommodated into the main housing 10 through the opening portion 10b (see Fig. 4) at a front side of the vehicle body 200 (i.e., in the frontward direction of the vehicle body 200). A bearing portion 13 illustrated in Fig. 3 is fitted to the opening portion 10b so that the lower shaft 1b is rotatably supported to the main housing 10.

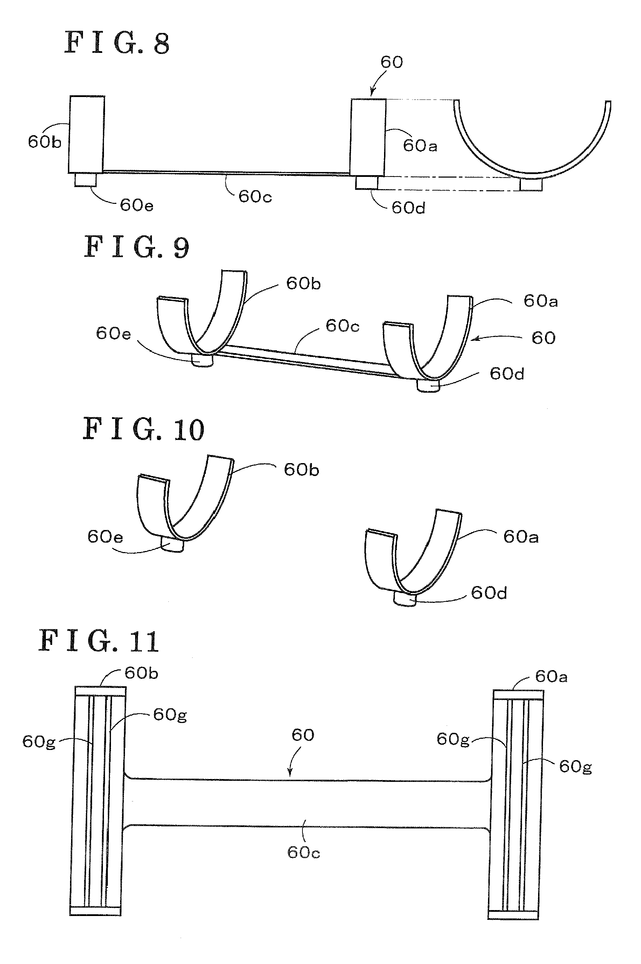

As illustrated in Fig. 4, the recesses 10d, 10e and the recess 10f connecting the recesses 10d, 10e are formed on the inner wall of the main housing 10. The recesses 10d, 10e are provided at positions separated from each other by a predetermined distance in the axial direction. Bushes 60a, 60b, and a connection portion 60c constituting a bearing member 60 are fitted to be held at the recesses 10d, 10e, and the recess 10f respectively. As Figs. 7 to 9 illustrate, the bearing member 60 of the steering apparatus according to the first embodiment is formed so as to fit the inner wall of the main housing 10. The bearing member 60 is an integrally formed member made of synthetic resin, i.e., the bearing member 60 includes the bushes 60a, 60b each formed in a semicircle or a U-shape and provided at positions separated from each other by a predetermined distance in the axial direction, and the connection portion 60c connecting the bushes 60a, 60b each other. Alternatively, as illustrated in Fig. 10, the bushes 60a, 60b may be formed separately without being connected to each other by the connection portion 60c. Then, the bushes 60a, 60b may be fitted to the recesses 10d, 10e within the main housing 10. As illustrated in Figs. 4 and 8, engagement projections 60d, 60e are integrally formed at the bushes 60a, 60b so as to engage with the engagement bores 10g, 10h formed within the recesses 10d, 10e of the main housing 10.

Accordingly, the outer tube 22 is smoothly slidable relative to the main housing 10 in the axial direction via the bushes 60a, 60b. In this case, a sliding surface of the bearing member 60 relative to the outer tube 22 may be positioned opposite to the biasing member 40, specifically, the contact members 43a, 43b. The sliding surface is not necessarily provided at an entire circumference of the outer tube 22. Therefore, each of the bushes 60a, 60b may be formed in a shape corresponding to an outer periphery of a fan shape, instead of a semicircle or a U-shape, so as to receive a necessary load by a further limited range. Accordingly, positions of the contact members 43a, 43b are more flexibly specified so that the outer tube 22 may be biased by the contact member 43a, 43b provided at appropriate positions. That is, according to a known annular bush, the outer tube 22 cannot be biased from directly above the annular bush. On the other hand, according to the aforementioned bushes 60a, 60b, a design flexibility may increase at a time of a positioning of the contact members 43a, 43b. Each of the engagement projections 60d, 60e formed at the bushes 60a, 60b may not only inhibit a misalignment of the bearing member 60 in a rotation direction thereof but also desirably include a cross-sectional area so as to overcome a frictional force generated when the outer tube 22 slides within the main housing 10.

According to the first embodiment, the biasing member 40 includes the base plate 41 made of steel and fixed to respective end surfaces 11a, 12a of the side walls 11, 12, and the spring members 42a, 42b biasing the outer tube 22 towards the bushes 60a, 60b at a position axially away from the flat surface portion 22a of the outer tube 22 by a predetermined distance. Each of the spring members 42a, 42b is formed by a lamination of plural disc springs and is positioned so as to press the flat surface portion 22a of the outer tube 22 via the contact members 43a, 43b made of synthetic resin and supported to the base plate 41. In a case where the biasing member 40 is fixed to the main housing 10, an intended pressing force is applied to the outer tube 22. The base plate 41 is fixed to the main housing 10 via a bolt, riveting, press-fitting of a pin, or any other methods to thereby securely fit the base plate 41 to the main housing 10. In addition, instead of the plural disc springs, a leaf spring or a coil spring may be applied to each of the spring members 42a, 42b.

Next, assembly procedures of the steering apparatus according to the first embodiment will be explained with reference to Figs. 1, 2, and 4. First, the bearing member 60 where the bushes 60a, 60b, and the connection portion 60c connecting the bushes 60a, 60b are integrally formed by synthetic resin is accommodated within the main housing 10. The bushes 60a, 60b, and the connection portion 60c are fitted to the recesses 10d, 10e, 10f formed at the inner wall of the main housing 10 respectively. At this time, because the bushes 60a, 60b are connected to each other by the connection portion 60c, storage, transfer, and assembly, for example, of the bearing member 60 are easily conducted. The bushes 60a, 60b, and the connection portion 60c are easily and securely fitted to the recesses 10d, 10e, and the recess 10f. In addition, the engagement projections 60d, 60e of the bushes 60a, 60b engage with the engagement bores 10g, 10h respectively, thereby securely retaining the bearing member 60 within the main housing 10. After the outer tube 22 is accommodated within the main housing 10, the engagement projections 60d, 60e within the engagement bores 10g, 10h are visually observed from the outside of the main housing 10 so that it is confirmed that the bearing member 60 is stably retained within the main housing 10.

After the bearing member 60 is retained within the main housing 10, the outer tube 22 is accommodated within the main housing 10. Then, the biasing member 40 is assembled on the main housing 10 from the upper side of the vehicle body 200 so as to be fixed to the main housing 10. That is, an intended pressing load is applied to the outer tube 22 in a case where the biasing member 40 is fixed to the main housing 10 where the outer tube 22 and the bearing member 60 are accommodated. In addition, because the outer tube 22 is pressed towards an axis thereof by a biasing force of the spring members 42a, 42b in a state where lower flat surface portions of the contact members 43a, 43b are in contact with the flat surface portion 22a of the outer tube 22, a rotation of the outer tube 22 at the axis thereof is securely inhibited. Further, the bearing member 60 appropriately supports the outer tube 22 in a state where the bearing member 60 is arranged at a lower side of the vehicle body 200 within the main housing 10 and a lower outer peripheral surface of the outer tube 22 is in contact with an inner wall of the bearing member 60. Thus, the axial sliding of the outer tube 22 is smoothly performed.

A drive portion of the telescopic mechanism 2 is described next. As Fig. 3 illustrates, the steering apparatus according to the first embodiment is provided with an attachment 2a arranged in an opening 10c formed on the side wall 12 of the main housing 10 in a state where the attachment 2a is movable in the axial direction, which is in the frontward and rearward direction of the vehicle, in the opening 10c and fixed to the outer tube 22. The attachment 2a is made of metal and formed in a tubular form with a bottom portion. The attachment 2a is arranged such that the attachment 2a may contact with the front end and the rear end of the opening 10c of the main housing 10. The bottom portion of the attachment 2a is connected to the side surface of the outer tube 22 in a state where both ends of the bottom portion in the frontward direction and the rearward direction of the vehicle body 200 are welded to the side surface of the outer tube 22, for example.

As illustrated in Fig. 3, an electric motor 70 is retained to the main housing 10. An output shaft of the electric motor 70 is connected to a threaded shaft 72, and a nut 73 screwed to the threaded shaft 72 is arranged within the attachment 2a. The nut 73 arranged within the attachment 2a moves in the axial direction on the threaded shaft 72 in response to the rotation of the threaded shaft 72 driven by the electric motor 70. As a result, the nut 73 and the attachment 2a move in the frontward and rearward direction of the vehicle together with the outer tube 22, the inner tube 21, the upper shaft 1a and the steering wheel 100. A reduction mechanism is provided between the output shaft of the electric motor 70 and the threaded shaft 72 so that an appropriately reduced output power of the electric motor 70 is transmitted to the threaded shaft 72. As Fig. 3 illustrates, the steering apparatus according to the first embodiment is provided with a tilt mechanism 3 at a position in the downward direction of the fixing bracket 30. The tilt mechanism 3 does not relate to the detailed description of the steering apparatus in this disclosure and describing the tilt mechanism 3 in detail is omitted.

In order to drive the telescopic mechanism 2 having the aforementioned configuration, the electric motor 70 is activated so that the output shaft of the electric motor 70 is driven to rotate. The rotation is reduced, or decelerated, through the reduction mechanism and transmitted to the threaded shaft 72, which in turn moves the nut 73 screwed to the threaded shaft 72 in the axial direction so that the outer tube 22 moves in the axial direction together with the attachment 2a that accommodates the nut 73. Along with the movement of the outer tube 22, the inner tube 21, the upper shaft 1a, and the steering wheel 100 move in the axial direction. Accordingly, by turning off the electric motor 70 in a state where the steering wheel 100 is at an intended position in the frontward and rearward direction of the vehicle, the steering wheel 100 is adjusted to the intended operational position.

The steering apparatus according to the first embodiment functions as the energy absorbing means. The energy, or a shock, is absorbed in a following manner. Fig. 3 illustrates a normal state of the steering apparatus. In a situation where a load from rearward equal to or more than a predetermined amount is applied to the steering wheel 100, the inner tube 21 integrally connected with the upper shaft 1a moves in the axial direction relative to the outer tube 22. In other words, the inner tube 21, together with the upper shaft 1a and the steering wheel 100, moves in the frontward direction from the position in the normal state as illustrated in Fig. 3 to a predetermined stop position. The movement of the inner tube 21, the upper shaft 1a, and the steering wheel 100 in the aforementioned range works to absorb the shock on the steering wheel 100. In other words, in a case where the load greater than the predetermined load is applied on the steering wheel 100, the inner tube 21 is progressively received into the outer tube 22, which moves the inner tube 21 in the frontward direction against the frictional force applied due to an annular frictional material provided between the inner tube 21 and the outer tube 22, so that the shock is absorbed.

According to the first embodiment, the bearing member 60 is formed as illustrated in Figs. 11, 12, 13, and 14 or alternatively, formed as illustrated in Figs. 7 to 9 or Fig. 10. Fig. 11 illustrates a plan view of a first modified example of the bearing member 60. A front view and a side view of the first modified example of the bearing member 60 are similar to Fig. 8. As illustrated in Fig. 11, plural grooves 60g are formed at an inner surface of a portion of each of the bushes 60a, 60b, the portion making contact with the outer tube 22. Then, a slide grease applied to the plural grooves 60g is retained thereat, thereby ensuring a smooth sliding operation of the outer tube 22.

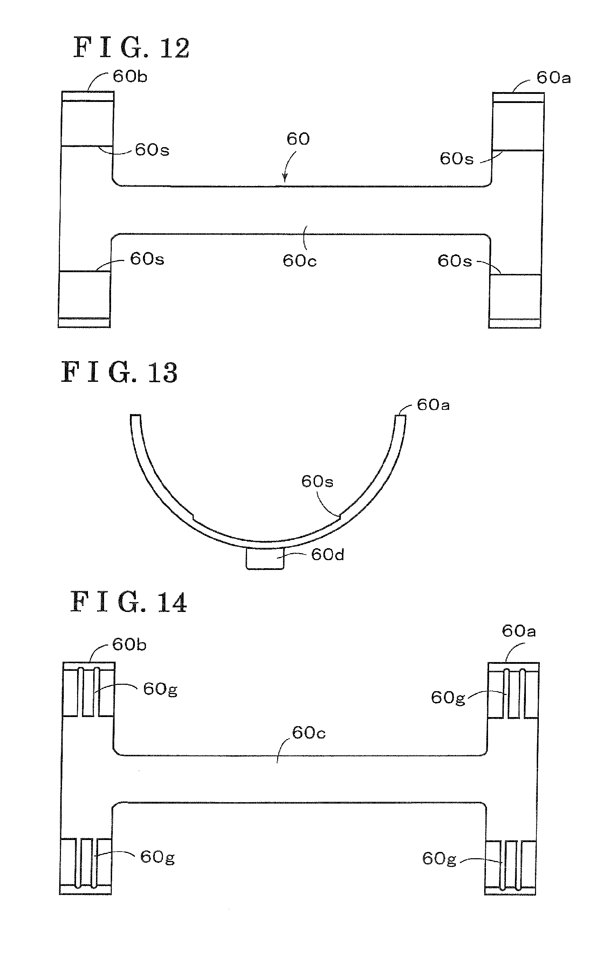

Figs. 12 and 13 illustrate a plan view and a side view of a second modified example of the bearing member 60. A front view of the second modified example of the bearing member 60 is similar to Fig. 8. In order to minimize a material and a weight of the bearing member 60, a contact area of the bearing member 60 relative to the outer tube 22 is minimized within an allowable range and a thickness in the vicinity of a bottom surface of the bearing member 60 (the bushes 60a, 60b) is reduced. That is, each of the bushes 60a, 60b includes a first portion making contact with the outer tube 22 and a second portion inhibited from making contact with the outer tube 22. The thickness of the second portion inhibited from making contact with the outer tube 22 of each of the bushes 60a, 60b is smaller than the thickness of the first portion making contact with the outer tube 22 of each of the bushes 60a, 60b. As a result, a stepped portion 60s is formed at the inner surface of each of the bushes 60a, 60b, however, the necessary contact area relative to the outer tube 22 is still ensured.

Fig. 14 illustrates a plan view of a third modified example of the bearing member 60. A front view and a side view of the third modified example are similar to Figs. 8 and 13 respectively. The third modified example is obtained by a combination of the first modified example illustrated in Fig. 11 and the second modified example illustrated in Figs. 12 and 13. The plural grooves 60g are formed at the inner surface of each of the bushes 60a, 60b while the thickness in the vicinity of the bottom surface of each of the bushes 60a, 60b is reduced so as to form the stepped portion 60s. Accordingly, the contact area of the bearing member 60 relative to the outer tube 22 is minimized within the allowable range to thereby reduce the material and the weight of the bearing member 60. In addition, the slide grease appropriately applied to the grooves 60g is retained thereat, thereby ensuring the smooth sliding operation of the outer tube 22.

Next, a steering apparatus for a vehicle according to a second embodiment will be explained with reference to Figs. 3, 15 to 22. Configurations of the steering apparatus according to the second embodiment are similar to those of the first embodiment. A difference of the second embodiment from the first embodiment will be basically explained. The similar components of the second embodiment to the first embodiment bear the same reference numerals.

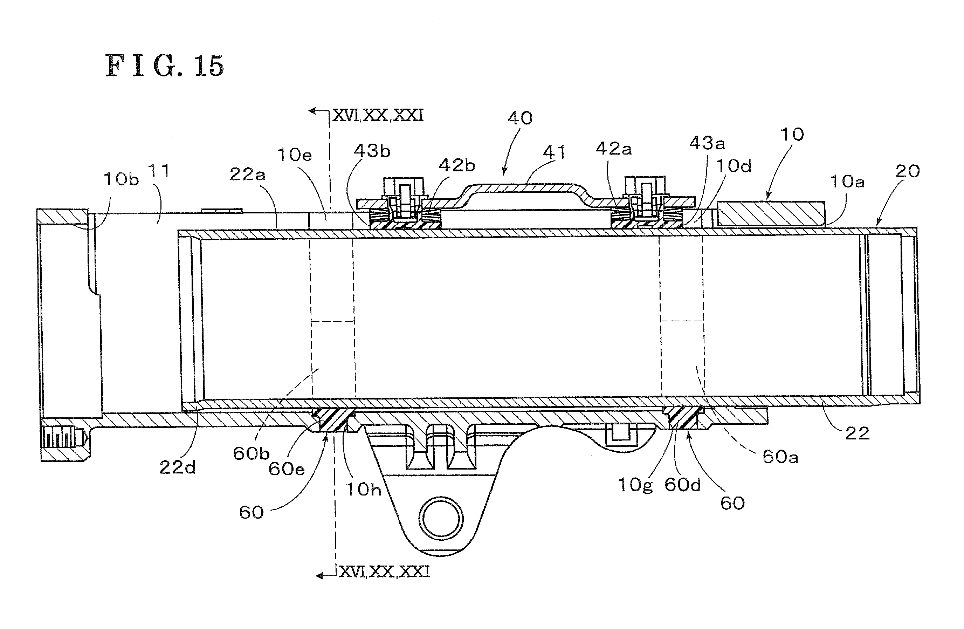

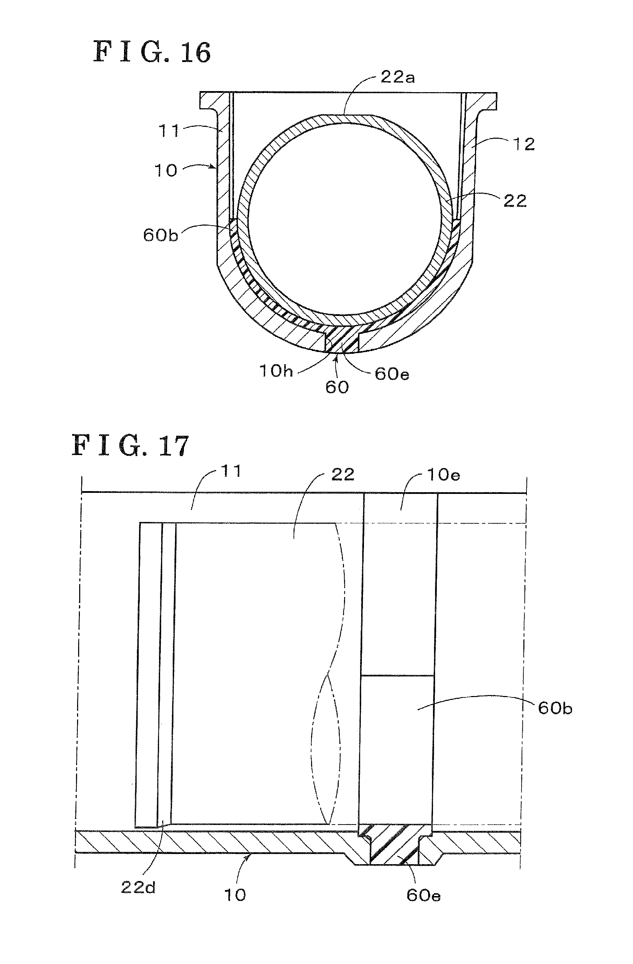

As Figs. 15 and 16 illustrate, the main housing 10 of the steering apparatus according to the second embodiment is a case made by metal die-cast. The metal used for the die-cast, for example, is aluminum. The main housing 10 is provided with the pair of side walls 11, 12 serving as the first and second side walls and extending in the axial direction. The side walls 11, 12 are provided with the opening therebetween in the upward direction of the vehicle. At the same time, the main housing 10 is provided with the opening portions 10a, 10b at opposing ends in the axial direction as illustrated in Fig. 15. The main housing 10 is provided with a larger size between the side walls 11, 12 relative to the maximum outer diameter of the outer tube 22 that constitutes the movable column member 20. That is, the side walls 11, 12 of the main housing 10 form a distance therebetween, a length of the distance being greater than the diameter of the movable column member 20. The inner wall of the main housing 10 is provided with a curved surface fitting the exterior surface of the outer tube 22. As Fig. 16 illustrates, the main housing 10 is provided with a cross-sectional shape obtained in a direction perpendicular to the axial direction, the cross-sectional shape including the pair of side walls 11, 12, in a U-shape. The main housing 10 serves as the case provided with the side walls 11, 12 extending in the axial direction with the opening therebetween in the upward direction in Figs. 15 and 16. Accordingly, the main housing 10 may be manufactured without difficulty with aluminum die-cast, or a similar manufacturing method. As a result, the inner surface of the main housing 10 may be formed in an intended form, i.e., a curved surface fitting the exterior surface of the outer tube 22, without difficulty in a manufacturing process. In addition, the recesses 10d, 10e, and the engagement bores 10g, 10h are simultaneously formed when the main housing 10 is manufactured. Therefore, a cutting process and a punching process are not required, which may lead to a reduction of the manufacturing process.

The outer tube 22, which is made of metal, is formed in a tubular form. The outer tube 22 is formed with the flat surface portion 22a, extending in the axial direction on the exterior surface of the outer tube 22. As illustrated in Fig. 15, the rear end of the outer tube 22 in the rearward direction of the vehicle body 200 is accommodated into the main housing 10 through the opening portion 10b at a front side of the vehicle body 200 (i.e., in the frontward direction of the vehicle body 200). The bearing portion 13 illustrated in Fig. 3 is fitted to the opening portion 10b so that the lower shaft 1b is rotatably supported to the main housing 10. An enlarged diameter portion 22d obtained by an enlargement of the diameter of the outer tube 22 at a front end of the vehicle body 200 is formed at the outer tube 22. The main housing 10 is provided with the larger size between the side walls 11, 12 relative to an outer diameter of the enlarged diameter portion 22d (i.e., the maximum outer diameter of the outer tube 22).

As illustrated in Fig. 15, the recesses 10d, 10e are formed on the inner wall of the main housing 10. The recesses 10d, 10e are provided at positions separated from each other by a predetermined distance in the axial direction. The bushes 60a, 60b constituting the bearing member 60 are fitted to be held at the recesses 10d, 10e respectively. As Figs. 15 to 16 illustrate, the bearing member 60 of the steering apparatus according to the second embodiment is formed so as to fit the inner wall of the main housing 10. The bearing member 60 is a synthetic resin member obtained by the bushes 60a, 60b each formed in a semicircle or a U-shape and provided at positions separated from each other by a predetermined distance in the axial direction. As illustrated in Figs. 15 and 16, the engagement projections 60d, 60e are integrally formed at the bushes 60a, 60b so as to engage with the engagement bores 10g, 10h formed within the recesses 10d, 10e of the main housing 10.

As illustrate in Fig. 17, the outer diameter of the enlarged diameter portion 22d is specified to be larger than an inner diameter of the bearing member 60, specifically, of the bush 60b. The enlarged diameter portion 22d is arranged to be contactable with a side surface of the bush 60b. Accordingly, in a case where the rear end of the outer tube 22 in the rearward direction of the vehicle body 200 is accommodated into the main housing 10 through the opening portion 10b at the front side of the vehicle body 200 and then the enlarged diameter portion 22d makes contact with the side surface of the bush 60b, the axial movement of the outer tube 22 is securely blocked, i.e., the movable column member 20 is configured to be inhibited from moving in the axial direction.

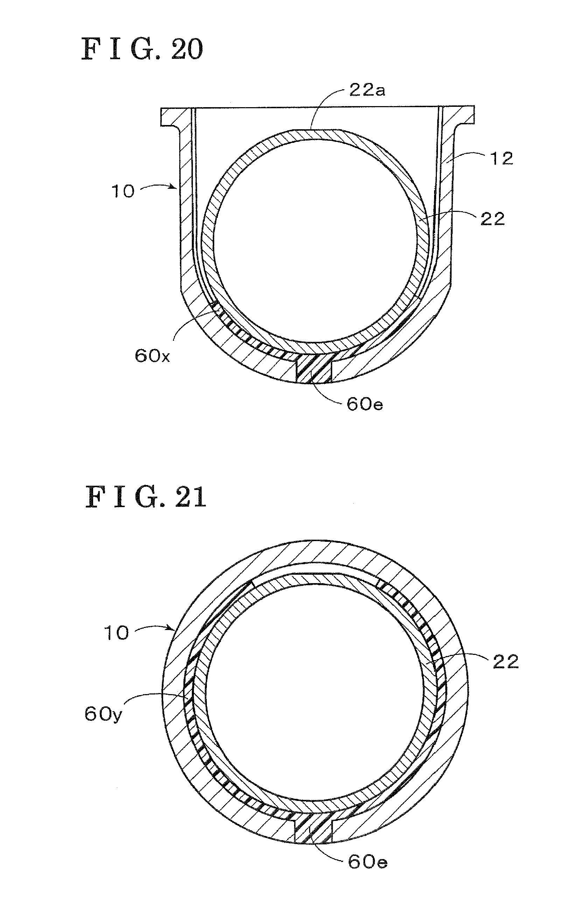

Accordingly, the outer tube 22 is smoothly slidable relative to the main housing 10 in the axial direction via the bushes 60a, 60b. In this case, the sliding surface of the bearing member 60 relative to the outer tube 22 may be positioned opposite to the biasing member 40. The sliding surface is not necessarily provided at an entire circumference of the outer tube 22. Therefore, each of the bushes 60a, 60b may be formed in a shape corresponding to an outer periphery of a fan shape as illustrated by a bearing member 60x in Fig. 20, instead of a semicircle or a U-shape, so as to receive a necessary load by a further limited range.

On the other hand, as illustrated in Fig. 8 where the main housing 10 is formed by a tubular member, a bearing member 60y substantially formed in a C-shape close to a circular shape may be applied. As a result, a contact area between the enlarged diameter portion 22d and a side surface of the bearing member 60y is greater than that of the bearing member 60 or the bearing member 60x illustrated in Figs. 2 and 7. A force to block or restrict the axial movement of the outer tube 22 is preferentially ensured. The engagement projection 60e integrally formed at each of the bearing members 60, 60x, 60y may not only inhibit a misalignment of each of the bearing members 60, 60x, 60y in a rotation direction thereof but also desirably include a cross-sectional area so as to overcome a load generated when the enlarged diameter portion 22d of the outer tube 22 makes contact with the engagement projection 60e in addition to a frictional force generated when the outer tube 22 slides within the main housing 10.

As illustrated in Fig. 15, the biasing member 40 of the second embodiment includes the base plate 41 made of steel and fixed to the respective end surfaces 11a, 12a of the side walls 11, 12, and the spring members 42a, 42b biasing the outer tube 22 towards the bushes 60a, 60b at a position axially away from the flat surface portion 22a of the outer tube 22 by a predetermined distance. Each of the spring members 42a, 42b is formed by a lamination of plural disc springs and is positioned so as to press the flat surface portion 22a of the outer tube 22 via the contact members 43a, 43b made of synthetic resin and supported to the base plate 41. In a case where the biasing member 40 is fixed to the main housing 10, an intended pressing force is applied to the outer tube 22. The base plate 41 is fixed to the main housing 10 via a bolt, riveting, press-fitting of a pin, or any other methods to thereby securely fit the base plate 41 to the main housing 10. In addition, instead of the plural disc springs, a leaf spring or a coil spring may be applied to each of the spring members 42a, 42b.

Next, assembly procedures of the steering apparatus according to the second embodiment will be explained with reference to Figs. 3 and 15. First, the bearing member 60 including the bushes 60a, 60b formed by synthetic resin is accommodated within the main housing 10. The bushes 60a, 60b are fitted to the recesses 10d, 10e formed at the inner wall of the main housing 10 respectively. At this time, the bushes 60a, 60b are easily and securely fitted to the recesses 10d, 10e. In addition, the engagement projections 60d, 60e of the bushes 60a, 60b engage with the engagement bores 10g, 10h respectively, thereby securely retaining the bearing member 60 within the main housing 10.

After the bearing member 60 is retained within the main housing 10, the outer tube 22 is accommodated within the main housing 10. Then, the biasing member 40 is assembled on the main housing 10 from the upper side of the vehicle body 200 so as to be fixed to the main housing 10. That is, an intended pressing load is applied to the outer tube 22 in a case where the biasing member 40 is fixed to the main housing 10 where the outer tube 22 and the bearing member 60 are accommodated. Looseness or shakiness in a radial direction of the outer tube 22 is appropriately inhibited. Specifically, because the outer tube 22 is pressed towards the axis thereof by a biasing force of the spring members 42a, 42b in a state where the lower flat surface portions of the contact members 43a, 43b are in contact with the flat surface portion 22a of the outer tube 22, looseness or shakiness in the radial direction of the outer tube 22 is inhibited. In addition, a rotation of the outer tube 22 at the axis thereof is securely inhibited. Further, the bearing member 60 appropriately supports the outer tube 22 in a state where the bearing member 60 is arranged at the lower side of the vehicle body 200 within the main housing 10 and the lower outer peripheral surface of the outer tube 22 is in contact with the inner wall of the bearing member 60. Thus, the axial sliding of the outer tube 22 is smoothly performed.

The drive portion of the telescopic mechanism 2 is described next. As Fig. 3 illustrates, the steering apparatus according to the second embodiment is provided with the attachment 2a arranged in the opening 10c formed on the side wall 12 of the main housing 10 in a state where the attachment 2a is movable in the axial direction, which is in the frontward and rearward direction of the vehicle, in the opening 10c and fixed to the outer tube 22. The attachment 2a is made of metal and formed in a tubular form with a bottom portion. The attachment 2a is arranged such that the attachment 2a may contact with the front end and the rear end of the opening 10c of the main housing 10. The bottom portion of the attachment 2a is connected to the side surface of the outer tube 22 in a state where both ends of the bottom portion in the frontward direction and the rearward direction of the vehicle body 200 are welded to the side surface of the outer tube 22, for example.

The electric motor 70 is retained to the main housing 10. The output shaft of the electric motor 70 is connected to the threaded shaft 72, and the nut 73 screwed to the threaded shaft 72 is arranged within the attachment 2a. The nut 73 arranged within the attachment 2a moves in the axial direction on the threaded shaft 72 in response to the rotation of the threaded shaft 72 driven by the electric motor 70. As a result, the nut 73 and the attachment 2a move in the frontward and rearward direction of the vehicle together with the outer tube 22, the inner tube 21, the upper shaft 1a and the steering wheel 100. The reduction mechanism is provided between the output shaft of the electric motor 70 and the threaded shaft 72 so that an appropriately reduced output power of the electric motor 70 is transmitted to the threaded shaft 72. As Fig. 3 illustrates, the steering apparatus according to the second embodiment is provided with the tilt mechanism 3 at a position in the downward direction of the fixing bracket 30. The tilt mechanism 3 does not relate to the detailed description of the steering apparatus in this disclosure and describing the tilt mechanism 3 in detail is omitted.

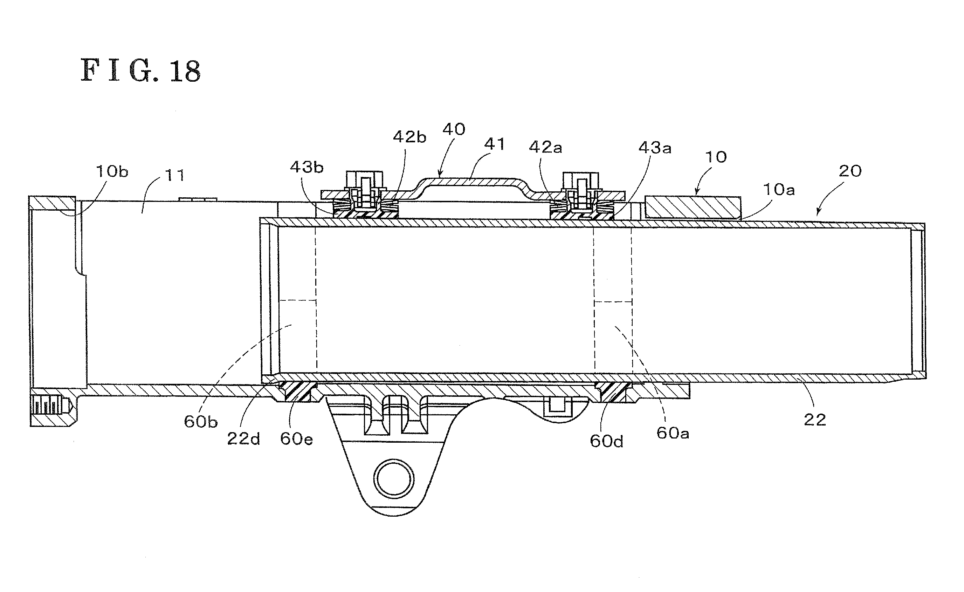

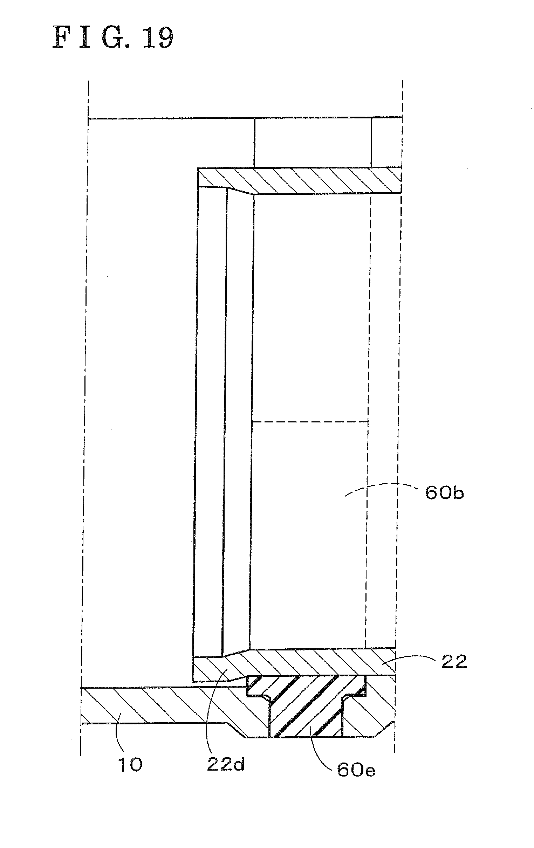

In order to drive the telescopic mechanism 2 having the aforementioned configuration, the electric motor 70 is activated so that the output shaft of the electric motor 70 is driven to rotate. The rotation is reduced, or decelerated, through the reduction mechanism and transmitted to the threaded shaft 72, which in turn moves the nut 73 screwed to the threaded shaft 72 in the axial direction so that the outer tube 22 moves in the axial direction together with the attachment 2a that accommodates the nut 73. Along with the movement of the outer tube 22, the inner tube 21, the upper shaft 1a, and the steering wheel 100 move in the axial direction. Accordingly, by turning off the electric motor 70 in a state where the steering wheel 100 is at an intended position in the frontward and rearward direction of the vehicle, the steering wheel 100 is adjusted to the intended operational position. At this time, as illustrated in Figs. 18 and 19, the movement of the outer tube is securely inhibited in a case where the enlarged diameter portion 22d makes contact with the side surface of the bush 60b, which results in an appropriate movement restriction means.

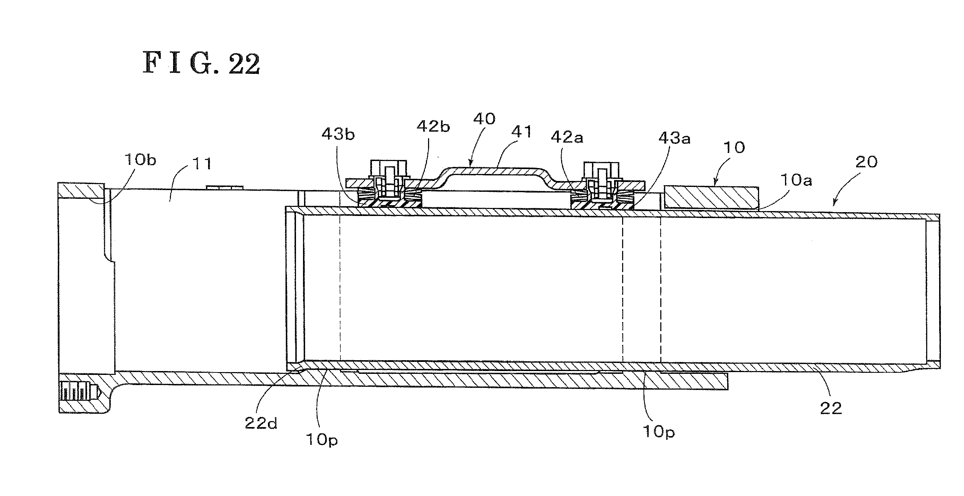

Fig. 22 illustrates a modified embodiment of the aforementioned second embodiment. According to the modified embodiment, instead of the bearing member 60, a projection portion 10p is formed at the inner wall of the main housing 10. The other configurations of the modified embodiment are the same as the second embodiment illustrated in Fig. 15 and thus the modified embodiment bears the same reference numerals as the second embodiment. That is, according to the modified embodiment, the outer tube 22 is similar to that illustrated in Fig. 15 and the main housing 10 is constituted by a case made by metal die-cast, for example, aluminum, provided with the pair of side walls 11, 12 extending in the axial direction. In addition, the side walls 11, 12 are provided with the opening therebetween in the upward direction of the vehicle and the main housing 10 is provided with the opening portions 10a, 10b at the opposing ends in the axial direction.

According to the modified embodiment, the main housing 10 is provided with a larger size between the side walls 11, 12 relative to the maximum outer diameter of the outer tube 22 that constitutes the movable column member 20. The inner wall of the main housing 10 is provided with a curved surface fitting the exterior surface of the outer tube 22. The main housing 10 is provided with the cross-sectional shape obtained in the direction perpendicular to the axial direction, the cross-sectional shape including the pair of side walls 11, 12, in a U-shape. The projection portion 10p is integrally formed at the main housing 10 in each of the frontward direction and the rearward direction of the vehicle. Specifically, the projection portion 10p projects from the inner wall of the main housing 10 to an axial center thereof. The projection portion 10p is formed so as to fit the inner wall of the main housing 10 and the outer diameter of the outer tube 22, i.e., formed in a U-shape, for example. According to the modified embodiment, at a time when the main housing 10 is manufactured with aluminum die-cast, for example, the projection portion 10p may be formed at the same time. Thus, a boring process which is necessary for manufacturing a tubular housing may not be required, which leads to a simple manufacture of the main housing 10.

In a case where the rear end of the outer tube 22 in the rearward direction of the vehicle body 200 is accommodated via the opening portion 10b into the main housing 10, the outer tube 22 is retained by receiving the intended pressing load by the biasing member 40. Then, the outer tube 22 is smoothly slidable by means of the projection portion 10p. In a case where the enlarged diameter portion 22d makes contact with a side surface of the projection portion 10p, the axial movement of the outer tube 22 is securely blocked, i.e., the movable column member 20 is configured to be inhibited from moving in the axial direction.

The steering apparatus according to the second embodiment and the modified embodiment thereof also function as the energy absorbing means. The energy, or the shock, is absorbed in a following manner. Fig. 3 illustrates a normal state of the steering apparatus. In a situation where a load from rearward equal to or more than a predetermined amount is applied to the steering wheel 100, the inner tube 21 integrally connected with the upper shaft 1a moves in the axial direction relative to the outer tube 22. In other words, the inner tube 21, together with the upper shaft 1a and the steering wheel 100, moves in the frontward direction from the position in the normal state as illustrated in Fig. 3 to a predetermined stop position. The movement of the inner tube 21, the upper shaft 1a, and the steering wheel 100 in the aforementioned range works to absorb the shock on the steering wheel 100. In other words, in a case where the load greater than the predetermined load is applied on the steering wheel 100, the inner tube 21 is progressively received into the outer tube 22, which moves the inner tube 21 in the frontward direction against the frictional force applied due to the annular frictional material provided between the inner tube 21 and the outer tube 22, so that the shock is absorbed.

According to the aforementioned second embodiment, the steering apparatus includes the main housing 10 retained to the vehicle body 200 and including the opening portions 10a, 10b at opposing ends in the axial direction, and the movable column member 20 formed by a tubular member and supported to the main housing 10 to be movable in the axial direction relative to the main housing 10, the movable column member 20 including the enlarged diameter portion 22d obtained by an enlargement of a diameter of at least a portion of the movable column member 20 at the front side of the vehicle body 200. The steering apparatus further includes the bearing member 60 mounted at the inner wall of the main housing 10 and supporting the movable column member 20 to be slidable relative to the main housing 10, and the biasing member 40 fixed to the main housing 10 to bias the movable column member 20. The movable column member 20 is supported to be movable in the axial direction relative to the main housing 10 via the bearing member 60 in a state where the rear end of the movable column member 20 in the rearward direction of the vehicle body 200 is accommodated into the main housing 10 through one of the opening portions 10b in the frontward direction of the vehicle body 200 and the movable column member 20 is biased by the biasing member 40, the movable column member 20 being configured to be inhibited from moving in the axial direction in a case where the enlarged diameter portion 22d makes contact with the bearing member 60.

In addition, according to the aforementioned second embodiment, the steering apparatus configured to adjust the operation position of the steering wheel 100 at least in the frontward and rearward direction of the vehicle, the steering apparatus includes the main housing 10 retained to the vehicle body 200 and including the side walls 11, 12 extending in the axial direction of the main housing 10 with the opening formed between the side walls 11, 12, the main housing 10 including the opening portions 10a, 10b at opposing ends in the axial direction and integrally including the projection portion 10p projecting from the inner wall of the main housing 10 to the axial center thereof The steering apparatus further includes the movable column member 20 supported to the main housing 10 to be movable in the axial direction relative to the main housing 10 and formed by a tubular member accommodated into the main housing 10 and supported to the projection portion 10p to be slidable thereto, the movable column member 20 including the enlarged diameter portion 22d obtained by an enlargement of a diameter of at least a portion of the movable column member 20 at the front side of the vehicle body 200. The movable column member 20 is supported to be movable in the axial direction relative to the main housing 10 in a state where the rear end of the movable column member 20 in the rearward direction of the vehicle body 200 is accommodated into the main housing 10 through one of the opening portions 10b in the frontward direction of the vehicle body 200 and the movable column member 20 is biased by the biasing member 40, the movable column member 20 being configured to be inhibited from moving in the axial direction in a case where the enlarged diameter portion 22d makes contact with the projection portion 10p of the main housing 10.

## Claims

1. A steering apparatus for a vehicle configured to adjust an operation position of a steering wheel (100) at least in a frontward and rearward direction of a vehicle, the steering apparatus comprising:
a main housing (10) retained to a vehicle body (200) and including first and second side walls (11, 12) extending in an axial direction of the main housing (10) with an opening formed between the first and second side walls (11, 12), the main housing (10) including opening portions (10a, 10b) at opposing ends in the axial direction;
a movable column member (20) formed by a tubular member and supported to the main housing (10) to be movable in the axial direction relative to the main housing (10), the movable column member (20) accommodated into the main housing (10) through one of the opening portions (10a, 10b) at the opposing ends of the main housing (10) in the axial direction, the movable column member (20) being connected to the steering wheel (100);
a bearing member (60, 60x, 60y) mounted at an inner wall of the main housing (10) through the opening formed between the first and second side walls (11, 12), the bearing member (60, 60x, 60y) supporting the movable column member (20) to be slidable relative to the main housing (10), and;
a biasing member (40) fixed to respective end surfaces 11a, 12a of the first and second side walls (11, 12) of the main housing (10) to bias the movable column member (20), and
the movable column member (20) being supported to the main housing (10) in a state where the biasing member (40) biases the movable column member (20) to the main housing (10) via the bearing member (60, 60x, 60y).

2. The steering apparatus according to claim 1, wherein the first and second side walls (11, 12) of the main housing (10) form a distance therebetween, a length of the distance being greater than a diameter of the tubular member forming the movable column member (20), and the inner wall of the main housing (10) includes a curved surface fitting an exterior surface of the movable column member (20).

3. The steering apparatus according to claim 2, wherein the main housing (10) includes a cross-sectional shape obtained in a direction perpendicular to the axial direction, the cross-sectional shape being formed in a U-shape while including the first and second side walls (11, 12), and the bearing member (60) is formed in a U-shape fitting the inner wall of the main housing (10).

4. The steering apparatus according to claim 3, wherein the main housing (10) includes an engagement bore (10g, 10h) at the inner wall, and the bearing member (60, 60x, 60y) includes an engagement projection (60d, 60e) engaging with the engagement bore (10g, 10h).

5. The steering apparatus according to any one of claims 1 through 4, wherein the inner wall of the main housing (10) is formed by a recess (10d, 10e, 10f) retaining the bearing member (60, 60x, 60y).

6. The steering apparatus according to any one of claims 1 through 5, wherein the bearing member (60, 60x, 60y) includes a pair of bushes (60a, 60b) supporting the movable column member (20) at positions separated from each other by a predetermined distance in the axial direction.

7. The steering apparatus according to claim 6, wherein the pair of bushes (60a, 60b) is connected to be integrally formed.

8. The steering apparatus according to either claim 6 or 7, wherein each of the pair of bushes (60a, 60b) is divided into a first portion making contact with the movable column member (20) and a second portion inhibited from making contact with the movable column member (20), and a thickness of the second portion is smaller than a thickness of the first portion.

9. The steering apparatus according to any one of claims 6 through 8, wherein each of the pair of bushes (60a, 60b) includes a portion making contact with the movable column member (20) and including an inner surface, the inner surface being formed by a groove (60g) where a slide grease is retained.

10. The steering apparatus according to any one of claims 1 through 9, wherein the biasing member (40) includes a base plate (41) fixed to the respective end surfaces 11a, 12a of the first and second side walls (11, 12), and a pair of spring members (42a, 42b) supported to the base plate (41) to bias the movable column member (30) towards the bearing member (60, 60x, 60y).

11. The steering apparatus according to any one of claims 1 through 10, wherein the movable column member (20) includes an enlarged diameter portion (22d) obtained by an enlargement of a diameter of at least a portion of the movable column member (20) at a front side of the vehicle body (200), and the movable column member (20) is configured to be inhibited from moving in the axial direction in a case where the enlarged diameter portion (22d) of the movable column member (20) makes contact with the bearing member (60, 60x, 60y) in a state where a rear end of the movable column member (20) in a rearward direction of the vehicle body (200) is accommodated into the main housing (10) through one of the opening portions (10b) in a frontward direction of the vehicle body (200) and the movable column member (20) is biased by the biasing member (40).

12. The steering apparatus according to claim 11, wherein the enlarged diameter portion (22d) of the movable column member (20) includes an outer diameter greater than an inner diameter of the bearing member (60, 60x, 60y), and the movable column member (20) is arranged so that the enlarged diameter portion (22d) is contactable with a side surface of the bearing member (60, 60x, 60y).

13. The steering apparatus according to any one of claims 1 through 10, wherein the main housing (10) integrally includes a projection portion (10p) projecting from the inner wall of the main housing (10) to an axial center thereof,
wherein the movable column member (20) is formed by the tubular member accommodated into the main housing (10) and supported to the projection portion (10p) to be slidable thereto, the movable column member (20) including an enlarged diameter portion (22d) obtained by an enlargement of a diameter of at least a portion of the movable column member (20) at a front side of the vehicle body (200),
and wherein the movable column member (20) is supported to be movable in the axial direction relative to the main housing (10) in a state where a rear end of the movable column member (20) in a rearward direction of the vehicle body (200) is accommodated into the main housing (10) through one of the opening portions (10b) in a frontward direction of the vehicle body (200) and the movable column member (20) is biased by the biasing member (40), the movable column member (20) being configured to be inhibited from moving in the axial direction in a case where the enlarged diameter portion (22d) of the movable column member (20) makes contact with the projection portion (10p).

14. The steering apparatus according to claim 13, wherein the first and second side walls (11, 12) of the main housing (10) form a distance therebetween, a length of the distance being greater than an outer diameter of the enlarged diameter portion (22d) of the movable column member (20), and the inner wall of the main housing (10) includes a curved surface fitting an exterior surface of the movable column member (20).
